(19) Europäisches Patentamt

European Patent Office

Office européen des brevets

(11) **EP 1 793 236 B1**

(12) **EUROPEAN PATENT SPECIFICATION**

(45) Date of publication and mention
of the grant of the patent:
**11.03.2009  Bulletin 2009/11**

(51) Int Cl.:
**G01S 1/00** (2006.01)

(21) Application number: **06124170.9**

(22) Date of filing: **15.11.2006**

(54) **Improved discriminator function for GPS code alignment**

Verbesserte Diskriminatorfunktion für GPS-Codeausrichtung

Fonction de discriminateur améliorée pour alignement de code GPS

(84) Designated Contracting States:
**BE DE FR**

(30) Priority: **28.11.2005  US 287377**

(43) Date of publication of application:
**06.06.2007  Bulletin 2007/23**

(73) Proprietor: **Honeywell International Inc.**
**Morristown NJ 07960 (US)**

(72) Inventor: **Simpson, Robert G.**
**Ellicott City, MD 21042 (US)**

(74) Representative: **Haley, Stephen**
**Gill Jennings & Every LLP**
**Broadgate House**
**7 Eldon Street**
**London EC2M 7LH (GB)**

(56) References cited:
**EP-A- 1 598 677**          **US-A1- 2002 101 912**

- **KAPLAN ET AL: "UNDERSTANDING GPS - Principles and Applications" UNDERSTANDING GPS PRINCIPLES AND APPLICATIONS, 1996, pages 142-150, XP002165743**
- **VAN DIERENDONCK A. J. ET AL: "Theory and Performance of Narrow Correlator Spacing in a GPS Receiver" NAVIGATION: JOURNAL OF THE INSTITUTE OF NAVIGATION, vol. 39, no. 3, October 1992 (1992-10), pages 265-283, XP002421310 U.S.A**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The subject matter of this disclosure generally relates to global positioning system (GPS) signals. More particularly, the subject matter of this disclosure pertains to methods and systems that can provide code alignment for GPS signal processing.

The global positioning system (GPS) may be used for determining the position of a user on or near the earth from signals received from multiple orbiting satellites. The orbits of the GPS satellites are arranged in multiple planes, in order that signals can be received from at least four GPS satellites at any selected point on or near the earth.

Each satellite transmits two spread-spectrum signals in the L band, known as L1 and L2, with separate carrier frequencies. L1 is at a nominal center frequency of 1575.42 MHz and L2 is at a nominal center frequency of 1227.60 MHz. The two signals are used to eliminate errors that may arise due to the dispersion of the transmitted signals by the ionosphere. Each satellite uses at least one of two pseudorandom noise (PRN) codes that are unique to that satellite to modulate its carrier signals. This allows the L-band signals from a number of satellites to be individually identified and separated in a receiver. Each carrier is also modulated by a slower-varying data signal defining the satellite orbits and other system information. One of the PRN codes is referred to as the C/A (coarse/acquisition) code, while the second is known as the P (precise) code.

Two signals are broadcast on the L1 frequency, a coarse/acquisition (CIA) and an encrypted precision ranging P(Y) code. The C/A code is typically delayed by 90 degrees in carrier phase from the P(Y) code. The C/A code is a PRN Gold code of 1023 chips, run at a chipping rate of 1.023 MHz, resulting in a null-to-null bandwidth of 2.046 MHz and a repetition rate of 1 millisecond. One use for the C/A code is that it may be used to synchronize the receiver with the longer P(Y) code, which is generated by the Modulo-2 addition (i.e., a logical Exclusive OR operation) of two code sequences of 15,345,000 chips and 15,345,037 chips, respectively. Different satellites will have different sequences. The resulting P(Y) code has a period of 7 days. At a chipping rate of 10.23 MHz, the P(Y) code has a null-to-null bandwidth of 20.46 MHz. The system broadcasts only the P(Y) code on the L2 frequency.

In the conventional GPS receiver, replicas of the P-code and C/A code may be locally generated in the same manner as in the satellite. The L1 and L2 signals from a given satellite are demodulated by aligning the phases, i.e., by adjusting the timing, of the locally-generated codes with those modulated onto the signals from that satellite. In order to achieve such phase alignment, the locally generated code replicas are correlated with the received signals and the phase of the locally generated code is adjusted to bring the signals into temporal alignment. Each chip in the code in the received signal arrives at a low power that is below the noise level. In order to obtain a detectable signal, the received signal is repeatedly added across all the chips. A starting time of each epoch of the received C/A code may then be determined from this operation. Since the starting time of each transmitted epoch is defined, the time of receipt can be used as a measure of the transit time or range to the satellite. Again, because the C/A and P-codes are unique to each satellite, a specific satellite may be identified based on the results of the correlations between the received signals and the locally-generated C/A and P-code replicas. Therefore, aligning the locally-generated C/A and P-code replicas with those received from the satellite is critical to the operation of a GPS receiver.

In order to align the locally-generated C/A code with the unique C/A code in a satellite's signal, a GPS receiver will use what is known as a discriminator function. A conventional GPS receiver will take the locally-generated C/A code replica (known as the prompt code) and time shift it forward or backward in time by half a chip or less to produce an early code and a late code. The early and late codes are then correlated with the incoming C/A code in the signal from the GPS satellite. This correlation operation produces results that are squared to obtain two correlator powers (Pe and PI), which are then input into the discriminator function. The discriminator function will compare the two correlator powers and produce an output. The output is used as a control signal in a delay lock loop (DLL) to adjust the rate of the locally generated C/A code to align it with the C/A code of the signal from the GPS satellite.

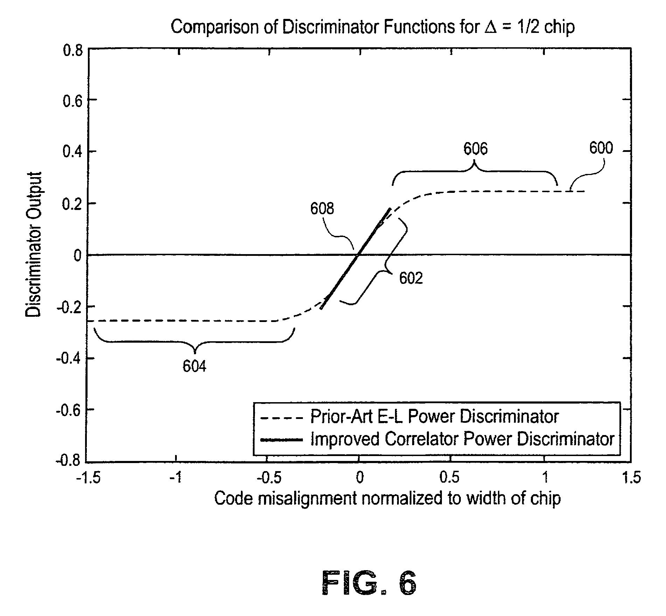

FIG. 6 illustrates an exemplary output of a typical discriminator. For a typical discriminator, the output is a curve 600 having a central portion 602 that is linear or nearly linear. However, typical discriminators exhibit some form of saturation, which is illustrated by curve 600 having limiting value at its two extremes, as shown by portions 604 and 606.

Two key attributes of a discriminator's output are the slope of curve 600 at the zero crossing 608 and the limiting value as it saturates. The slope at the zero crossing influences the bandwidth of the DLL. Larger slopes mean larger bandwidths. While larger bandwidths allow the DLL to respond more quickly to a misalignment, they also increase the impact of noise on the result. Proper design of the DLL involves a well chosen balance between responsiveness and noise sensitivity. In order to compare different discriminators, it is common practice to normalize their outputs to have the same slope at the zero crossing.

A normalized early-minus-late discriminator function for a discriminator may be calculated as follows:

$$D = \tfrac{1}{2}(1-\Delta)(Pe - Pl)/(Pe + Pl),$$

where

D is the discriminator output;
Δ is half the separation between the early and late correlators;
Pe is the correlator power for the early code; and
PI is the correlator power for the late code.

In FIG. 6, the exemplary output of a typical code discriminator has been calculated, where Δ = half a chip width and the curve has been normalized so that the slope is 1 at the zero crossing 608.

Assuming that two discriminator candidates have both been normalized to have the same slope at the zero crossing, the magnitude of the limiting value at saturation is also of interest. This characteristic affects what is known as the "pull-in" capability of the DLL. The larger the saturation value, the faster the DLL can pull the local C/A code into alignment with the received C/A code during acquisition phase. That means that for two discriminator candidates that have been normalized to have the same slope at the zero crossing, the one that produces the greater range of output values is preferable from an overall performance view.

Kaplan et al: "Understanding GPS - Principles and Applications", Understanding GPS Principles and Applications, 1996 pages 142-150, XP002165743, discloses a GPS receiver code tracking loop.

Accordingly, it would be desirable to provide methods and systems that provide good bandwidth and pull-in performance. It would also be desirable to provide improved discriminator methods and systems.

In accordance with one feature of the present invention, a method of aligning a local code with a code in a received signal of a satellite positioning system comprises: generating a prompt replica of the local code; generating a late replica of the local code and an early replica of the local code based on shifting the prompt replica by half of a chip at most; correlating the early, prompt, and late replicas of the local code with the received signal; determining an early correlator power, a prompt correlator power, and a late correlator power based on the correlations of the replicas of the local code with the received signal; calculating a discrimination output based on comparing the early correlator power and the late correlator power; and adjusting a rate of the local code based on the discrimination output, **characterised in that** the comparison in the calculating a discrimination step is normalized based on the early correlator power, the late correlator power, and the prompt correlator power.

In accordance with another feature of the present invention, an apparatus for aligning a local code with a code in a received signal of a satellite positioning system comprises: means for generating a prompt replica of the local code; means for generating a late replica of the local code and an early replica of the local code based on shifting the prompt replica by half of a chip at most in opposite directions; means for correlating the early, prompt, and late replicas of the local code with the received signal; means for determining an early correlator power, a prompt correlator power, and a late correlator power based on the correlations of the replicas of the local code with the received signal; means for calculating a discrimination output based on comparing the early correlator power and the late correlator power; and means for adjusting a rate of the local code based on the discrimination output, **characterised in that** the discrimination output is normalized based on the early correlator power, the late correlator power, and the prompt correlator power.

In accordance with another feature of the present invention, a delay lock loop is configured to track a pseudo random noise code in a received signal of a satellite positioning system. The delay lock loop comprises: a code generator that generates a prompt replica of the local code, a late replica of the local code and an early replica of the local code based on shifting the prompt replica by half of a chip at most; a demodulator configured to correlate the early, prompt, and late replicas of the local code with the received signal; a processor configured to calculate an early correlator power, a prompt correlator power, and a late correlator power based on the correlations of the replicas of the local code with the received signal; a code discriminator configured to calculate a discrimination output based on comparing the early correlator power and the late correlator power; and a feedback module configured to provide a signal that indicates an adjustment to a rate of the local code generated by the code generator based on the discrimination output, **characterised in that** the code discriminator normalizes the comparison based on the early correlator power, the later correlator power, and the prompt correlator power.

It is to be understood that both the foregoing general description and the following detailed description are exemplary and explanatory only and are not restrictive of the invention, as claimed.

In the Drawings;
The accompanying drawings, which are incorporated in and constitute a part of this specification, illustrate several embodiments of the invention and together with the description, serve to explain the principles of the invention.

FIG. 1 illustrates a block diagram of a GPS receiver in accordance with an embodiment of the invention;
FIG. 2 illustrates a more detailed block diagram of the signal processing module shown in FIG. 1 in accordance with another embodiment of the invention;
FIG. 3 illustrates an ideal correlator amplitude output;

FIG. 4 illustrates an ideal correlator power output;

FIG. 5 illustrates an ideal correlator output along with a correlator output that has been affected by multipath signals;

FIG. 6 illustrates an exemplary output of a typical code discriminator; and

FIG. 7 illustrates exemplary outputs of a typical code discriminator and a discriminator that is in accordance with embodiments of the invention.

Embodiments of the present invention pertain generally to methods and systems of processing a global positioning satellite (GPS) signal. More particularly, embodiments of the present invention provide an improved discriminator function that utilizes the early, prompt, and late correlator power values. For example, the improved discriminator function may be normalized based on all three of the early, prompt, and late correlator values. The improved discriminator function behaves linearly across a prescribed region whose width depends on the separation between correlators.

In some embodiments, the separation between correlators may be evenly spaced, such as +/- ½ chip. In other embodiments, the separation between correlators may be different to account for multipath signals. For example, the spacing between the prompt and late correlator values may be less than the spacing used for the early and prompt correlator values.

In addition, embodiments of the present invention may perform I and Q processing with IF signals and with signals that arise in baseband systems. Either technique may be used in embodiments of the present invention.

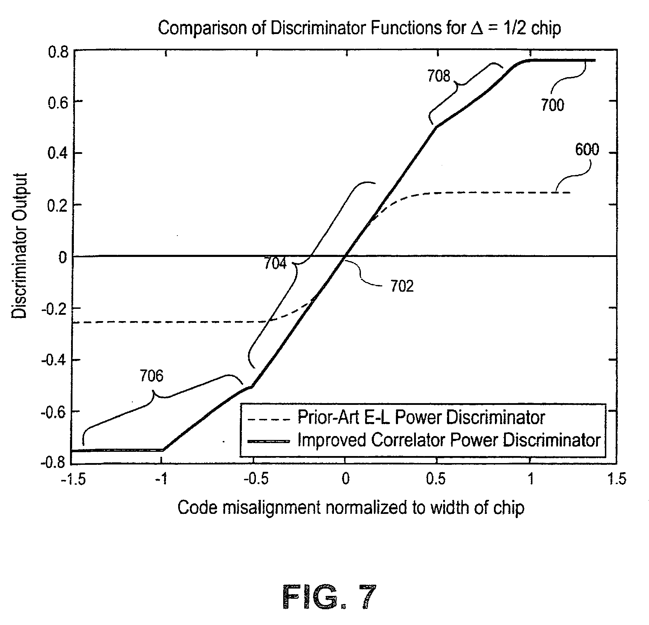

FIG. 7 shows a comparison of the normalized outputs for a typical discriminator and a discriminator that is in accordance with embodiments of the invention. In FIG. 7, the output of a typical discriminator is shown again as curve 600, while the output of a discriminator that is in accordance with embodiments of the invention is shown as curve 700. As in FIG. 6, curves 600 and 700 have been calculated where $\Delta$ = half a chip width and have been normalized so that the slope is 1 at the zero crossing 702.

However, as will be explained below, discriminators that are in accordance with embodiments of the invention will have a linear portion 704 that extends over a larger range than that of curve 600. In addition, these discriminators may exhibit higher saturation values. For example, as shown, portions 706 and 708 of curve 700 saturate at a higher value than curve 600. Since curves 600 and 700 have the same slope at the zero crossing 702, this implies they are supporting equal DLL bandwidths. However, as explained above, the discriminator of curve 600 will achieve poorer pull-in performance in comparison to the discriminator of curve 700. Or, the discriminator of curve 700 will exhibit better pull-performance than the typical discriminator exemplified by curve 600.

In view of the importance of properly establishing the DLL bandwidth while also achieving good pull-in performance, one skilled in the art will recognize that a discriminator whose output behaves more like curve 700 may perform better than a typical discriminator, such as the one exemplified in curve 600. Reference will now be made in detail to the present exemplary embodiments of the invention, examples of which are illustrated in the accompanying drawings. Wherever possible, the same reference numbers will be used throughout the drawings to refer to the same or like parts.

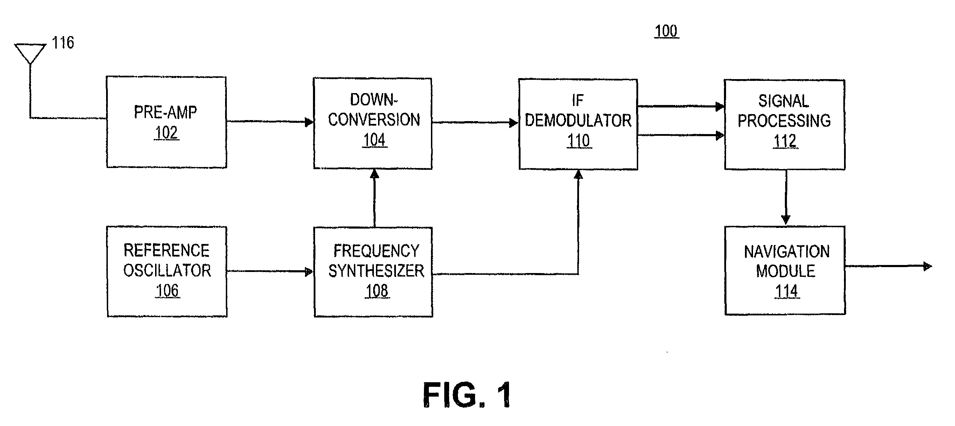

FIG. 1 illustrates a block diagram of a GPS receiver 100 in accordance with an embodiment of the invention. It should be readily apparent to those of ordinary skill in the art that the block diagram depicted in FIG. 1 represents a generalized schematic illustration and that other components may be added or existing components may be removed or modified. Moreover, the GPS receiver 100 may be implemented using various components. These components may be software components, hardware components, firmware, or any combination thereof.

As shown in FIG. 1, the GPS receiver 100 includes a pre-amp module 102, a down conversion module 104, a reference oscillator module 106, a frequency synthesizer module 108, an intermediate frequency demodulator 110, a signal processing module 112 and a navigation module 114.

A GPS signal may be received at an omni-directional antenna 116 and filtered by the pre-amp module 102. The filtered RF signal is then down-converted by the down conversion module 104.

The down conversion module 104 is driven by a first local oscillator signal $LO_1$ supplied by the frequency synthesizer module 108, which itself is driven by the reference oscillator 106. In addition, the frequency synthesizer 108 provides a second local oscillator signal $LO_2$ and a clock signal to the intermediate frequency (IF) module 110. The IF demodulator 110 may then generate digital in-phase and quadrature (I & Q) channels by multiplication by sine and cosine versions of the second local oscillator signal $LO_2$.

The signal processing module 112 may be configured to include a carrier loop and a code tracking loop (not shown in FIG. 1). The outputs of these loops may include a pseudorange, Doppler, and carrier phase, which are then processed by the navigation processing module 114 to determine the receiver's position, velocity, and time.

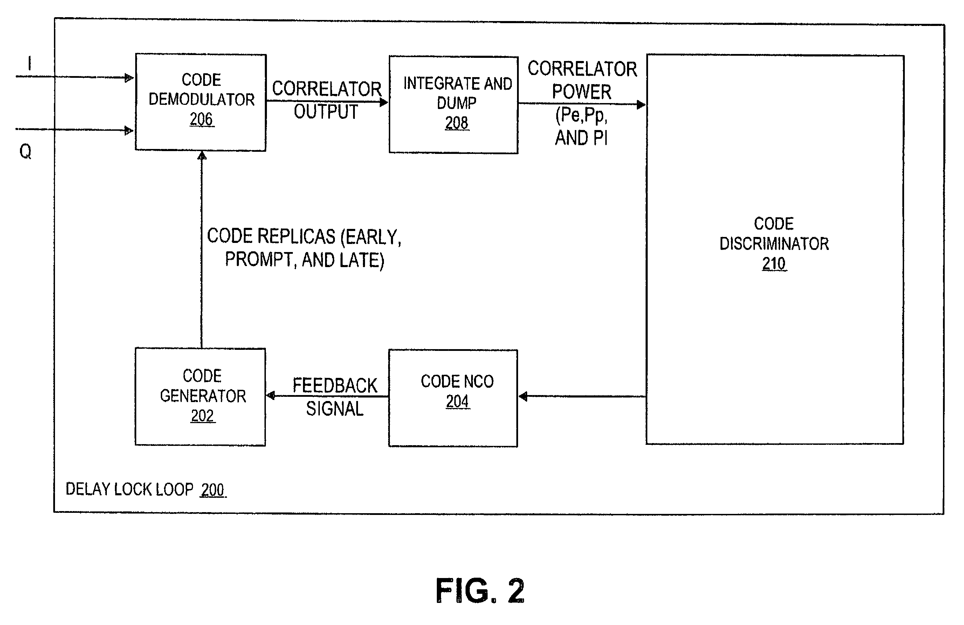

FIG. 2 illustrates a more detailed block diagram of the signal processing module 112 shown in FIG. 1 in accordance with another embodiment of the invention. As noted above, in order to track an incoming GPS signal, signal processing module 112 may employ two tracking loops. A delay lock loop (DLL) may be used to track the C/A code and a phase lock loop (PLL) may be used to track the carrier frequency of the incoming GPS signal. FIG. 2 illustrates an exemplary DLL for tracking the C/A code of an incoming GPS signal. As shown, a DLL loop 200 may comprise a code generator 202 and a code numerically controlled oscillator (NCO) 204.

Code generator 202 generates three different phases of local replica codes - Early, Prompt, and Late, which are separated from adjacent neighbors by at most ½ of a chip. The early code is advanced with respect to the prompt code and the late phase is delayed with respect to the prompt code. The three codes are inputted to a code demodulator 206 where they are multiplied with both the in-phase (I) and quadrature (Q) components of the incoming GPS signal. Code demodulator 206 then outputs these correlator values to an integrate and dump module 208.

Integrate and dump module 208 filters and squares the early, prompt, and late correlator values and produces early, prompt, and late correlator power values, Pe, Pp, and Pl. The I and Q channels may be processed side by side and then added to determine the overall correlator power data. The correlator power values are then provided to code discriminator 210.

Code discriminator 210 calculates an output by comparing the correlator power values. The output is then fed back to code NCO 204 to generate a feedback signal to code generator 202. Code generator 202 may then adjust its rate based on the feedback signal.

In some embodiments, code discriminator 210 calculates its output based on all three correlator powers, Pe, Pp, and Pl. One skilled in the art will recognize that this is unlike conventional discriminators, which use only early and late correlator powers. The following discussion briefly describes how all three correlator powers may be used by code discriminator 210.

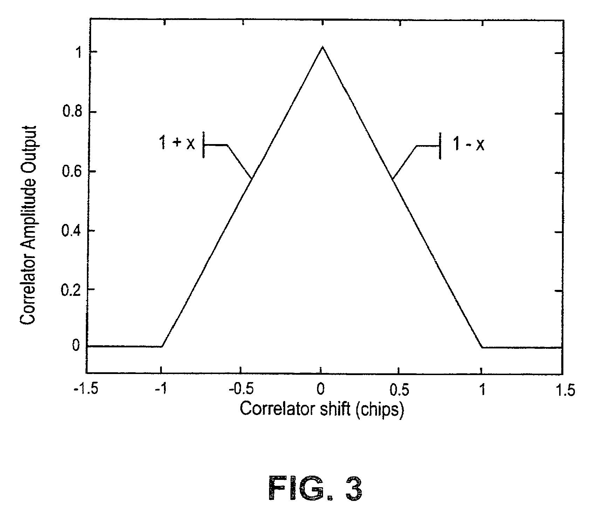

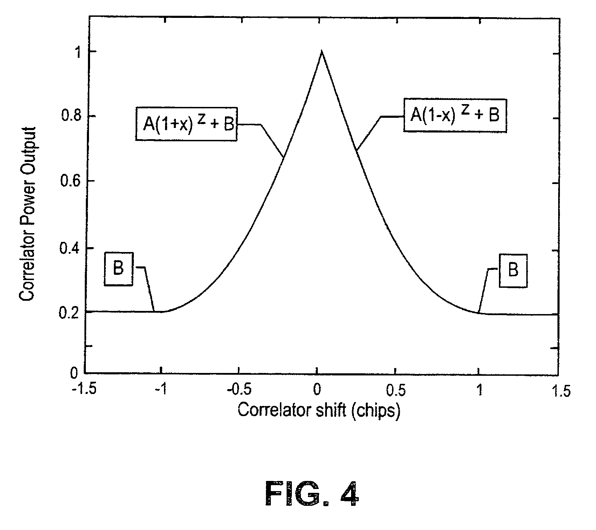

It is well known that the ideal output of the correlator is a symmetrical triangle function, which is shown in Fig. 3. However, the graph shown in Fig. 3 is the envelope of the voltage signal produced by the correlation process. In order to determine correlator power for use by the discriminator function, the correlator output must be squared. In receivers that use in-phase (I) and quadrature (Q) signals, both components are correlated separately, squared and added together to produce the correlator power. The resulting graph is shown in Fig. 4.

In the graph of correlator output versus correlator shift shown in Fig. 4, x represents the correlator shift normalized by the width of a single code chip, A represents an overall signal amplitude and B represents and arbitrary additive constant. Letting P(x) represent correlator power as a function of correlator shift x, we have:

$$P(x) = A(1+x)^2 + B \text{ , for } -1 < x < 0$$

$$P(x) = A(1-x)^2 + B \text{ , for } 0 < x < 1.$$

For the case of ½ chip spacing between the early and prompt and between the prompt and late correlators, and the correct alignment of the prompt correlator, we have:

$$Pe = P(-1/2) = A(1-1/2)^2 + B = A/4 + B;$$

$$Pp = P(0) = A + B;$$

and

$$Pl = P(1/2) = A(1-1/2)^2 + B = A/4 + B.$$

Now assume that the received signal and the prompt local code are misaligned by an amount "d." in this case, the early, prompt and late correlator powers are:

$$Pe = P(-1/2+d) = A(1+(-1/2+d))^2 + B = A(1/2+d)^2 + B;$$

$$Pp = P(d) = A(1-|d|)^2 + B;$$

and

$$PI = P(1/2+d) = A(1-(1/2+d))^2 + B = A(1/2-d)^2 + B.$$

It is noted that the above equations can be combined in order to solve for the misalignment value "d." In particular, "d" can be expressed according to the equations

$$d = (Pe - PI)/(4/3(Pe - Pp) - 4(PI - Pp)), \text{ where } 0 <= d <= 1;$$

and

$$d = (Pe - PI)/(4/3(PI - Pp) - 4(Pe - Pp)), \text{ where } -1 <= d <= 0.$$

In order to select which expression to use for "d," the relative values of Pe and

PI are considered. Thus, if Pe > PI, then the expression for 0 <= d <= 1 is used. Likewise, if Pe < PI, then the expression for -1 <= d <= 0 is used.

This quantity d can now be used as the definition of a discriminator function to be used in the delay lock loop. Note that while the numerator in d depends on the difference between the early and late correlator powers just as before, the denominator now involves the prompt correlator power as well. A plot of this discriminator function d versus misalignment x is shown in the curve in Fig. 7. Unlike the discriminator behavior shown in Fig. 6, discriminators of various embodiments exhibit linear behavior with a slope of 1 over the entire range from -1/2 chip to +1/2 chip. An example of the performance of such a discriminator is shown in Fig. 7. It also achieves greater extreme values than the discriminator shown in Fig. 6, thereby providing better pull-in performance.

This improved performance is a direct result of the altered form of the denominator contained in this definition of the discriminator.

Alternatively, in other embodiments, the discriminator function may accommodate chip spacings other than +/- ½. For example, for an arbitrary chip spacing Δ, the discriminator function of code discriminator 210 may be expressed as follows:

$$d = \Delta (1 - \Delta/2 )(Pe - PI)/( \Delta(Pe - Pp) - (2- \Delta)(PI - Pp)) \text{ for } Pe > PI;$$

and

$$d = \Delta (1 - \Delta/2 )(Pe - PI)/( \Delta(PI - Pp) - (2- \Delta)(Pe - Pp)) \text{ for } Pe < PI,$$

where Δ may be any arbitrary chip spacing, such as ½ or 1/20.

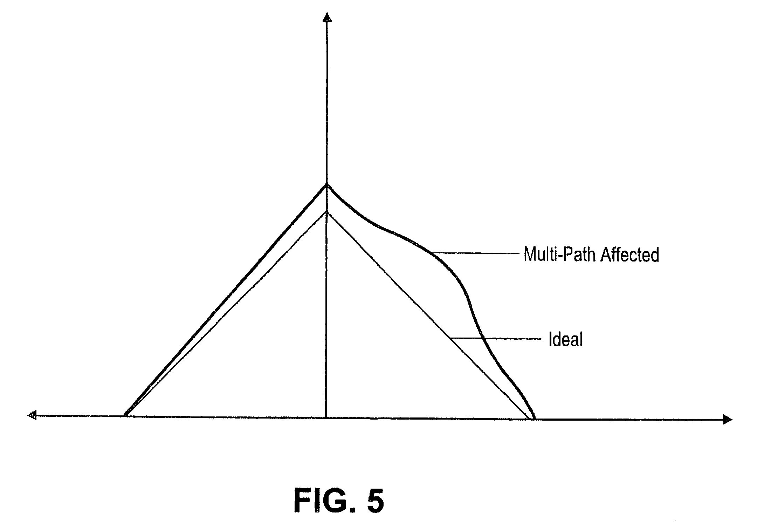

Of note, the above discriminator function still exhibits the desired slope of 1 at the zero crossing and is perfectly linear across the interval (-Δ, Δ). Accordingly, various embodiments of code discriminator 210 may employ unequal spacings between the correlators. For example, the early and prompt correlators may be spaced by ½ a chip, while the prompt and late correlators may be spaced by ¼ of a chip. The use of unequal spacings may be advantageous in order to deal with multipath signals that are adversely affecting the shape of the correlator function. An example of the effect of multipath signals on the correlator function is shown with reference to FIG. 5. Since multipath signals tend to arrive later than the direct path signals, the late correlator power may be more affected by multipath signals. Thus, code discriminator 210 may employ a smaller spacing between the prompt and late correlators to reduce the impact of multipath signals.

Certain embodiments may be performed as a computer program. The computer program may exist in a variety of forms both active and inactive.

For example, the computer program can exist as software program(s) comprised of program instructions in source code, object code, executable code or other formats; firmware program(s); or hardware description language (HDL) files. Any of the above can be embodied on a computer readable medium, which include storage devices and signals, in compressed or uncompressed form. Exemplary computer readable storage devices include conventional computer system RAM (random access memory), ROM (read-only memory), EPROM (erasable, programmable ROM), EEPROM (electrically erasable, programmable ROM), and magnetic or optical disks or tapes. Exemplary computer readable signals, whether modulated using a carrier or not, are signals that a computer system hosting or running the present invention can be configured to access, including signals downloaded through the Internet or other networks. Concrete examples of the foregoing include distribution of executable software program(s) of the computer program on a CD-ROM or via internet download. In a sense, the internet itself, as an abstract entity, is a computer readable medium. The same is true of computer networks in general.

While the invention has been described with reference to the exemplary embodiments thereof, those skilled in the art will be able to make various modifications to the described embodiments without departing from the true spirit and scope. The terms and descriptions used herein are set forth by way of illustration only and are not meant as limitations. In particular, although the method has been described by examples, the steps of the method may be performed in a different order than illustrated or simultaneously.

**Claims**

1. A method of aligning a local code with a code in a received signal of a satellite positioning system, said method comprising:

    generating a prompt replica of the local code;
    generating a late replica of the local code and an early replica of the local code based on shifting the prompt replica by half of a chip at most;
    correlating the early, prompt, and late replicas of the local code with the received signal;
    determining an early correlator power, a prompt correlator power, and a late correlator power based on the correlations of the replicas of the local code with the received signal;
    calculating a discrimination output based on comparing the early correlator power and the late correlator power; and
    adjusting a rate of the local code based on the discrimination output;
    **characterised in that** the comparison in the calculating a discrimination step is normalized based on the early correlator power, the late correlator power, and the prompt correlator power.

2. The method of claim 1, wherein calculating the discrimination output based on the early correlator power, the prompt correlator power, and the late correlator power comprises:

    determining if the early correlator power is greater than the late correlator power; and
    calculating the discrimination output based on a quotient, when the early correlator power is greater than the late correlator power, wherein a numerator of the quotient is based on a difference between the early correlator power and the late correlator power and a denominator of the quotient is based on a first factor times a difference between the early correlator power and the prompt correlator power and a second factor times a difference between the late correlator power and the prompt correlator power.

3. The method of claim 1, wherein calculating the discrimination output based on the early correlator power, the prompt correlator power, and the late correlator power at correlator spacings of ½ chip comprises:

    calculating the discrimination output based on the quotient, when the early correlator power is greater than the late correlator power, wherein the numerator of the quotient is equal to the difference between the early correlator power and the late correlator power and the denominator of the quotient is equal to 4/3 times the difference between the early correlator power and the prompt correlator power minus four times the difference between the late correlator power and the prompt correlator power.

4. The method of claim 1, wherein calculating the discrimination output based on the early correlator power, the prompt correlator power, and the late correlator power at correlator spacings of 1/20 chip comprises:

    calculating the discrimination output based on the quotient, when the early correlator power is greater than the late correlator power, wherein the numerator of the quotient is equal to two times the difference between the early correlator power and the late correlator power and the denominator of the quotient is equal to 40/39 times the difference between the early correlator power and the prompt correlator power minus 40 times the difference between the late correlator power and the prompt correlator power.

**5.** The method of claim 1, wherein calculating the discrimination output based on the early correlator power, the prompt correlator power, and the late correlator power comprises:

determining if the early correlator power is less than the late correlator power; and
calculating the discrimination output based on a quotient, when the early correlator power is less than the late correlator power, wherein a numerator of the quotient is based on a difference between the early correlator power and the late correlator power and a denominator of the quotient is based on a first factor times a difference between the late correlator power and the prompt correlator power and a second factor times a difference between the early correlator power and the prompt correlator power.

**6.** The method of claim 5, wherein calculating the discrimination output based on the early correlator power, the prompt correlator power, and the late correlator power at correlator spacings of ½ chip comprises:

calculating the discrimination output based on the quotient, when the early correlator power is less than the late correlator power, wherein the numerator of the quotient is equal to the difference between the early correlator power and the late correlator power and the denominator of the quotient is equal to 4/3 times the difference between the late correlator power and the prompt correlator power minus four times the difference between the early correlator power and the prompt correlator power.

**7.** The method of claim 5, wherein calculating the discrimination output based on the early correlator power, the prompt correlator power, and the late correlator power at correlator spacings of 1/20 chip comprises:

calculating the discrimination output based on the quotient, when the early correlator power is less than the late correlator power, wherein the numerator of the quotient is equal to two times the difference between the early correlator power and the late correlator power and the denominator of the quotient is equal to 40/39 times the difference between the late correlator power and the prompt correlator power minus 40 times the difference between the early correlator power and the prompt correlator power.

**8.** An apparatus for aligning a local code with a code in a received signal of a satellite positioning system comprises:

means for generating a prompt replica of the local code;
means for generating a late replica of the local code and an early replica of the local code based on shifting the prompt replica by half of a chip at most in opposite directions;
means for correlating the early, prompt, and late replicas of the local code with the received signal;
means for determining an early correlator power, a prompt correlator power, and a late correlator power based on the correlations of the replicas of the local code with the received signal;
means for calculating a discrimination output based on comparing the early correlator power and the late correlator power; and
means for adjusting a rate of the local code based on the discrimination output;
**characterised in that** the discrimination output is normalized based on the early correlator power, the late correlator power, and the prompt correlator power.

**9.** A delay lock loop (200) configured to track a pseudo random noise code in a received signal of a satellite positioning system, said delay lock loop comprising:

a code generator (202) that generates a prompt replica of the local code, a late replica of the local code and an early replica of the local code based on shifting the prompt replica by half of a chip at most;
a demodulator (206) configured to correlate the early, prompt, and late replicas of the local code with the received signal;
a processor (208) configured to calculate an early correlator power, a prompt correlator power, and a late correlator power based on the correlations of the replicas of the local code with the received signal;
a code discriminator (210) configured to calculate a discrimination output based on comparing the early correlator power and the late correlator power; and
a feedback module (204) configured to provide a signal that indicates an adjustment to la rate of the local code generated by the code generator based on the discrimination output;

**characterised in that** the code discriminator normalizes the comparison based on the early correlator power, the late correlator power, and the prompt correlator power.

**Patentansprüche**

**1.** Verfahren zum Ausrichten eines lokalen Codes mit einem Code in einem empfangenen Signal eines Satellitenpositionierungssystems, wobei das Verfahren folgendes umfaßt:

Erzeugen eines sofortigen Duplikats des lokalen Codes;
Erzeugen eines späten Duplikats des lokalen Codes und eines frühen Duplikats des lokalen Codes auf der Basis des Verschiebens des sofortigen Duplikats um höchstens einen halben Chip;
Korrelieren des frühen, sofortigen und späten Duplikats des lokalen Codes mit dem empfangenen Signal;
Bestimmen einer frühen Korrelatorleistung, einer sofortigen Korrelatorleistung und einer späten Korrelatorleistung auf der Basis der Korrelationen der Duplikate des lokalen Codes mit dem empfangenen Signal;
Berechnen einer Diskriminationsausgabe auf der Basis des Vergleichens der frühen Korrelatorleistung und der späten Korrelatorleistung und
Justieren einer Rate des lokalen Codes auf der Basis der Diskriminationsausgabe;
**dadurch gekennzeichnet, daß** der Vergleich beim Berechnen eines Diskriminationsschritts auf der Basis der frühen Korrelatorleistung, der späten Korrelatorleistung und der sofortigen Korrelatorleistung normiert wird.

**2.** Verfahren nach Anspruch 1, wobei das Berechnen der Diskriminationsausgabe auf der Basis der frühen Korrelatorleistung, der sofortigen Korrelatorleistung und der späten Korrelatorleistung folgendes umfaßt:

Bestimmen, ob die frühe Korrelatorleistung größer ist als die späte Korrelatorleistung; und
Berechnen der Diskriminationsausgabe auf der Basis eines Quotienten, wenn die frühe Korrelatorleistung größer ist als die späte Korrelatorleistung, wobei ein Zähler des Quotienten auf einer Differenz zwischen der frühen Korrelatorleistung und der späten Korrelatorleistung basiert und ein Nenner des Quotienten auf einem ersten Faktor mal einer Differenz zwischen der frühen Korrelatorleistung und der sofortigen Korrelatorleistung und einem zweiten Faktor mal einer Differenz zwischen der späten Korrelatorleistung und der sofortigen Korrelatorleistung basiert.

**3.** Verfahren nach Anspruch 1, wobei das Berechnen der Diskriminationsausgabe auf der Basis der frühen Korrelatorleistung, der sofortigen Korrelatorleistung und der späten Korrelatorleistung bei Korrelatorabständen von 1/2 Chip folgendes umfaßt: Berechnen der Diskriminationsausgabe auf der Basis des Quotienten, wenn die frühe Korrelatorleistung größer ist als die späte Korrelatorleistung, wobei der Zähler des Quotienten gleich der Differenz zwischen der frühen Korrelatorleistung und der späten Korrelatorleistung ist und der Nenner des Quotienten gleich 4/3 mal der Differenz zwischen der frühen Korrelatorleistung und der sofortigen Korrelatorleistung minus dem 4fachen der Differenz zwischen der späten Korrelatorleistung und der sofortigen Korrelatorleistung ist.

**4.** Verfahren nach Anspruch 1, wobei das Berechnen der Diskriminationsausgabe auf der Basis der frühen Korrelatorleistung, der sofortigen Korrelatorleistung und der späten Korrelatorleistung bei Korrelatorabständen von 1/20 Chip folgendes umfaßt:

Berechnen der Diskriminationsausgabe auf der Basis des Quotienten, wenn die frühe Korrelatorleistung größer ist als die späte Korrelatorleistung, wobei der Zähler des Quotienten gleich dem 2fachen der Differenz zwischen der frühen Korrelatorleistung und der späten Korrelatorleistung ist und der Nenner des Quotienten gleich dem 40/39fachen der Differenz zwischen der frühen Korrelatorleistung und der sofortigen Korrelatorleistung minus dem 40fachen der Differenz zwischen der späten Korrelatorleistung und der sofortigen Korrelatorleistung ist.

**5.** Verfahren nach Anspruch 1, wobei das Berechnen der Diskriminationsausgabe auf der Basis der frühen Korrelatorleistung, der sofortigen Korrelatorleistung und der späten Korrelatorleistung folgendes umfaßt:

Bestimmen, ob die frühe Korrelatorleistung kleiner ist als die späte Korrelatorleistung; und
Berechnen der Diskriminationsausgabe auf der Basis eines Quotienten, wenn die frühe Korrelatorleistung kleiner ist als die späte Korrelatorleistung, wobei ein Zähler des Quotienten auf einer Differenz zwischen der frühen Korrelatorleistung und der späten Korrelatorleistung basiert und ein Nenner des Quotienten auf einem ersten Faktor mal einer Differenz zwischen der späten Korrelatorleistung und der sofortigen Korrelatorleistung und einem zweiten Faktor mal einer Differenz zwischen der frühen Korrelatorleistung und der sofortigen Korrelatorleistung basiert.

6. Verfahren nach Anspruch 5, wobei das Berechnen der Diskriminationsausgabe auf der Basis der frühen Korrelatorleistung, der sofortigen Korrelatorleistung und der späten Korrelatorleistung bei Korrelatorabständen von 1/2 Chip folgendes umfaßt: Berechnen der Diskriminationsausgabe auf der Basis des Quotienten, wenn die frühe Korrelatorleistung kleiner ist als die späte Korrelatorleistung, wobei der Zähler des Quotienten gleich der Differenz zwischen der frühen Korrelatorleistung und der späten Korrelatorleistung ist und der Nenner des Quotienten gleich 4/3 mal der Differenz zwischen der späten Korrelatorleistung und der sofortigen Korrelatorleistung minus dem 4fachen der Differenz zwischen der frühen Korrelatorleistung und der sofortigen Korrelatorleistung ist.

7. Verfahren nach Anspruch 5, wobei das Berechnen der Diskriminationsausgabe auf der Basis der frühen Korrelatorleistung, der sofortigen Korrelatorleistung und der späten Korrelatorleistung bei Korrelatorabständen von 1/20 Chip folgendes umfaßt:

Berechnen der Diskriminationsausgabe auf der Basis des Quotienten, wenn die frühe Korrelatorleistung kleiner ist als die späte Korrelatorleistung, wobei der Zähler des Quotienten gleich dem 2fachen der Differenz zwischen der frühen Korrelatorleistung und der späten Korrelatorleistung ist und der Nenner des Quotienten gleich dem 40/39fachen der Differenz zwischen der späten Korrelatorleistung und der sofortigen Korrelatorleistung minus dem 40fachen der Differenz zwischen der frühen Korrelatorleistung und der sofortigen Korrelatorleistung ist.

8. Vorrichtung zum Ausrichten eines lokalen Codes auf einem Code in einem empfangenen Signal eines Satellitenpositionierungssystems umfaßt:

Mittel zum Erzeugen eines sofortigen Duplikats des lokalen Codes;
Mittel zum Erzeugen eines späten Duplikats des lokalen Codes und eines frühen Duplikats des lokalen Codes auf der Basis des Verschiebens des sofortigen Duplikats um höchstens einen halben Chip in entgegengesetzten Richtungen;
Mittel zum Korrelieren des frühen, sofortigen und späten Duplikats des lokalen Codes mit dem empfangenen Signal;
Mittel zum Bestimmen einer frühen Korrelatorleistung, einer sofortigen Korrelatorleistung und einer späten Korrelatorleistung auf der Basis der Korrelationen der Duplikate des lokalen Codes mit dem empfangenen Signal;
Mittel zum Berechnen einer Diskriminationsausgabe auf der Basis des Vergleichens der frühen Korrelatorleistung und der späten Korrelatorleistung und
Mittel zum Justieren einer Rate des lokalen Codes auf der Basis der Diskriminationsausgabe;
**dadurch gekennzeichnet, daß** die Diskriminationsausgabe auf der Basis der frühen Korrelatorleistung, der späten Korrelatorleistung und der sofortigen Korrelatorleistung normiert wird.

9. Verzögerte Regelschleife (200), konfiguriert zum Verfolgen eines Pseudozufallsrauschcodes in einem empfangenen Signal eines Satellitenpositionierungssystems, wobei die verzögerte Regelschleife folgendes umfaßt:

einen Codegenerator (202), der ein sofortiges Duplikat des lokalen Codes, ein spätes Duplikat des lokalen Codes und ein frühes Duplikat des lokalen Codes auf der Basis des Verschiebens des sofortigen Duplikats um höchstens einen halben Chip erzeugt;
einen Demodulator (206), der konfiguriert ist zum Korrelieren des frühen, sofortigen und späten Duplikats des lokalen Codes mit dem empfangenen Signal;
einen Prozessor (208), der konfiguriert ist zum Berechnen einer frühen Korrelatorleistung, einer sofortigen Korrelatorleistung und einer späten Korrelatorleistung auf der Basis der Korrelationen der Duplikate des lokalen Codes mit dem empfangenen Signal;
einen Codediskriminator (210), der konfiguriert ist zum Berechnen einer Diskriminationsausgabe auf der Basis des Vergleichens der frühen Korrelatorleistung und der späten Korrelatorleistung; und
ein Rückkopplungsmodul (204), das konfiguriert ist, ein Signal zu liefern, das eine Justierung auf eine Rate des lokalen Codes erzeugt durch den Codegenerator auf der Basis der Diskriminationsausgabe anzeigt;
**dadurch gekennzeichnet, daß** der Codediskriminator den Vergleich auf der Basis der frühen Korrelatorleistung, der späten Korrelatorleistung und der sofortigen Korrelatorleistung normiert.

**Revendications**

1. Procédé d'alignement d'un code local avec un code dans un signal reçu d'un système de positionnement par satellite, ledit procédé comprenant :

 la génération d'une réplique ponctuelle du code local ;
 la génération d'une réplique retardée du code local et d'une réplique avancée du code local basées sur le décalage de la réplique ponctuelle par une moitié de bribe au plus ;
 la corrélation des répliques avancée, ponctuelle et retardée du code local avec le signal reçu ;
 la détermination d'une puissance de corrélateur avancé, d'une puissance de corrélateur ponctuel, et d'une puissance de corrélateur retardé basées sur les corrélations des répliques du code local avec le signal reçu ;
 le calcul d'une sortie de discrimination basée sur la comparaison de la puissance de corrélateur avancé et de la puissance de corrélateur retardé ; et
 l'ajustement d'un taux du code local basé sur la sortie de discrimination ;
 **caractérisé en ce que** la comparaison dans l'étape de calcul d'une discrimination est normalisée d'après la puissance de corrélateur avancé, la puissance de corrélateur retardé et la puissance de corrélateur ponctuel.

2. Procédé selon la revendication 1, dans lequel le calcul de la sortie de discrimination basé sur la puissance de corrélateur avancé, la puissance de corrélateur ponctuel et la puissance de corrélateur retardé comprend :

 la détermination si la puissance de corrélateur avancé est supérieure ou non à la puissance de corrélateur retardé ; et
 le calcul de la sortie de discrimination basé sur un quotient, quand la puissance de corrélateur avancé est supérieure à la puissance de corrélateur retardé, dans lequel un numérateur du quotient est basé sur une différence entre la puissance de corrélateur avancé et la puissance de corrélateur retardé et un dénominateur du quotient est basé sur un premier facteur multiplié par une différence entre la puissance de corrélateur avancé et la puissance de corrélateur ponctuel et un second facteur multiplié par une différence entre la puissance de corrélateur retardé et la puissance de corrélateur ponctuel.

3. Procédé selon la revendication 1, dans lequel le calcul de la sortie de discrimination basé sur la puissance de corrélateur avancé, la puissance de corrélateur ponctuel et la puissance de corrélateur retardé à des espacements de corrélateur d'une demi-bribe comprend :

 le calcul de la sortie de discrimination basé sur le quotient, quand la puissance de corrélateur avancé est supérieure à la puissance de corrélateur retardé, dans lequel le numérateur du quotient est égal à la différence entre la puissance de corrélateur avancé et la puissance de corrélateur retardé et le dénominateur du quotient est égal à 4/3 fois la différence entre la puissance de corrélateur avancé et la puissance de corrélateur ponctuel moins quatre fois la différence entre la puissance de corrélateur retardé et la puissance de corrélateur ponctuel.

4. Procédé selon la revendication 1, dans lequel le calcul de la sortie de discrimination basé sur la puissance de corrélateur avancé, la puissance de corrélateur ponctuel et la puissance de corrélateur retardé à des espacements de corrélateur de 1/20$^e$ de bribe comprend :

 le calcul de la sortie de discrimination basé sur le quotient, quand la puissance de corrélateur avancé est supérieure à la puissance de corrélateur retardé, dans lequel le numérateur du quotient est égal à deux fois la différence entre la puissance de corrélateur avancé et la puissance de corrélateur retardé et le dénominateur du quotient est égal à 40/39 fois la différence entre la puissance de corrélateur avancé et la puissance de corrélateur ponctuel moins 40 fois la différence entre la puissance de corrélateur retardé et la puissance de corrélateur ponctuel.

5. Procédé selon la revendication 1, dans lequel le calcul de la sortie de discrimination basé sur la puissance de corrélateur avancé, la puissance de corrélateur ponctuel et la puissance de corrélateur retardé comprend :

 la détermination si la puissance de corrélateur avancé est inférieure ou non à la puissance de corrélateur retardé ; et
 le calcul de la sortie de discrimination basé sur un quotient, quand la puissance de corrélateur avancé est inférieure à la puissance de corrélateur retardé, dans lequel un numérateur du quotient est basé sur une différence entre la puissance de corrélateur avancé et la puissance de corrélateur retardé et un dénominateur du quotient est basé sur un premier facteur multiplié par une différence entre la puissance de corrélateur retardé et la puissance de corrélateur ponctuel et un second facteur multiplié par une différence entre la puissance de corrélateur avancé et la puissance de corrélateur ponctuel.

6.  Procédé selon la revendication 5, dans lequel le calcul de la sortie de discrimination basé sur la puissance de corrélateur avancé, la puissance de corrélateur ponctuel et la puissance de corrélateur retardé à des espacements de corrélateur d'une demi-bribe comprend :

    le calcul de la sortie de discrimination basé sur le quotient, quand la puissance de corrélateur avancé est inférieure à la puissance de corrélateur retardé, dans lequel le numérateur du quotient est égal à la différence entre la puissance de corrélateur avancé et la puissance de corrélateur retardé et le dénominateur du quotient est égal à 4/3 fois la différence entre la puissance de corrélateur avancé et la puissance de corrélateur ponctuel moins quatre fois la différence entre la puissance de corrélateur avancé et la puissance de corrélateur ponctuel.

7.  Procédé selon la revendication 5, dans lequel le calcul de la sortie de discrimination basé sur la puissance de corrélateur avancé, la puissance de corrélateur ponctuel et la puissance de corrélateur retardé à des espacements de corrélateur de 1/20$^e$ de bribe comprend :

    le calcul de la sortie de discrimination basé sur le quotient, quand la puissance de corrélateur avancé est inférieure à la puissance de corrélateur retardé, dans lequel le numérateur du quotient est égal à deux fois la différence entre la puissance de corrélateur avancé et la puissance de corrélateur retardé et le dénominateur du quotient est égal à 40/39 fois la différence entre la puissance de corrélateur retardé et la puissance de corrélateur ponctuel moins 40 fois la différence entre la puissance de corrélateur avancé et la puissance de corrélateur ponctuel.

8.  Appareil d'alignement d'un code local avec un code dans un signal reçu d'un système de positionnement par satellite, comprenant :

    un moyen de génération d'une réplique ponctuelle du code local
    un moyen de génération d'une réplique retardée du code local et d'une réplique avancée du code local basées sur le décalage de la réplique ponctuelle par une moitié de bribe au plus dans des sens opposés ;
    un moyen de corrélation des répliques avancée, ponctuelle et retardée du code local avec le signal reçu ;
    un moyen de détermination d'une puissance de corrélateur avancé, d'une puissance de corrélateur ponctuel, et d'une puissance de corrélateur retardé basées sur les corrélations des répliques du code local avec le signal reçu ;
    un moyen de calcul d'une sortie de discrimination basée sur la comparaison de la puissance de corrélateur avancé et de la puissance de corrélateur retardé ; et
    un moyen d'ajustement d'un taux du code local basé sur la sortie de discrimination ;
    **caractérisé en ce que** la sortie de discrimination est normalisée d'après la puissance de corrélateur avancé, la puissance de corrélateur retardé et la puissance de corrélateur ponctuel.

9.  Boucle de verrouillage de retard (200) configurée pour suivre un code de bruit pseudo-aléatoire dans un signal reçu d'un système de positionnement par satellite, ladite boucle de verrouillage de retard comprenant :

    un générateur de code (202) qui génère une réplique ponctuelle du code local, une réplique retardée du code local et une réplique avancée du code local basées sur le décalage de la réplique ponctuelle par une moitié de bribe au plus ;
    un démodulateur (206) configuré pour corréler les répliques avancée, ponctuelle et retardée du code local avec le signal reçu ;
    un processeur (208) pour calculer une puissance de corrélateur avancé, une puissance de corrélateur ponctuel, et une puissance de corrélateur retardé basées sur les corrélations des répliques du code local avec le signal reçu ;
    un discriminateur de code (210) configuré pour calculer une sortie de discrimination basée sur la comparaison de la puissance de corrélateur avancé et de la puissance de corrélateur retardé ; et
    un module de contre-réaction (204) configuré pour fournir un signal qui indique un ajustement d'un taux du code local généré par le générateur de code basé sur la sortie de discrimination ;
    **caractérisé en ce que** le discriminateur de code normalise la comparaison d'après la puissance de corrélateur avancé, la puissance de corrélateur retardé et la puissance de corrélateur ponctuel.

**FIG. 1**

FIG. 2

FIG. 3

FIG. 4

Multi-Path Affected

Ideal

FIG. 5

Comparison of Discriminator Functions for Δ = 1/2 chip

FIG. 6

Comparison of Discriminator Functions for Δ = 1/2 chip

FIG. 7